# EUROPÄISCHE PATENTSCHRIFT

(11) **EP 3 612 402 B1**
(45) Veröffentlichungstag und Bekanntmachung des Hinweises auf die Patenterteilung: **17.03.2021**
(21) Anmeldenummer: 18719084.8
(22) Anmeldetag: 11.04.2018
(51) Int. Cl.: B60K 6/365, B60K 6/405, B60K 6/445, F16H 1/28

(54) **GETRIEBE FÜR EIN KRAFTFAHRZEUG, INSBESONDERE FÜR EIN SERIELL/PARALLELES HYBRIDFAHRZEUG**
VEHICLE TRANSMISSION IN PARTICULAR FOR A SERIAL/PARALLEL HYBRID-VEHICLE
TRANSMISSION DE VÉHICULE, EN PARTICULIER POUR HYBRIDE SÉRIE-PARALLEL

(30) Priorität: 18.04.2017 DE 102017206510
(43) Veröffentlichungstag der Anmeldung: 26.02.2020
(73) Patentinhaber: Volkswagen Aktiengesellschaft, 38440 Wolfsburg (DE)
(72) Erfinder: MÜLLER, Frank, 38165 Essenrode (DE); AHRENS, Rainer, 38124 Braunschweig (DE)
(86) Internationale Anmeldenummer: PCT/EP2018/059254
(87) Internationale Veröffentlichungsnummer: WO 2018/192816

(56) Entgegenhaltungen:
- EP-A2- 2 857 243
- WO-A1-2011/111520
- DE-T5-112011 105 893
- GB-A- 2 405 129
- US-A1- 2005 204 537

## Beschreibung

Die Erfindung betrifft ein Getriebe für ein Kraftfahrzeug, insbesondere für ein seriell/paralleles Hybridfahrzeug mit den Merkmalen Oberbegriffes des Patentanspruchs 1. So ein Getriebe ist aus der US2005204537A bekannt Kraftfahrzeuge, insbesondere seriell/parallele Hybridfahrzeuge weisen neben einer Verbrennungskraftmaschine eine erste, generatorische, insbesondere generatorisch betreibbare Elektromaschine und eine zweite, motorische, insbesondere motorisch betreibbare Elektromaschine auf. Dabei wird in einem ersten Fahrbereich, welcher sich vom Fahrzeugstillstand bis zu einer bestimmten Fahrzeuggeschwindigkeit erstreckt, das System seriell betrieben und zwar indem Leistung von der Verbrennungskraftmaschine in der ersten, generatorischen Elektromaschine in elektrische Energie umgewandelt und auf die zweite, motorische Elektromaschine übertragen und von dieser dann der Fahrzeugantrieb betrieben wird. Ab der bestimmten Fahrzeuggeschwindigkeit wird das System parallel betrieben, indem ein Schaltelement geschlossen wird, durch welches die Verbrennungskraftmaschine direkt mit dem Fahrzeugantrieb verbunden wird.

Aus der EP 2 857 243 B1 ist eine Getriebestruktur für Hybridfahrzeuge mit einer Verbrennungskraftmaschine sowie mit einer ersten und zweiten Elektromaschine bekannt, bei denen durch eine durch die Verbrennungskraftmaschine antreibbare Antriebswelle über einen ersten Zahnradsatz eine der ersten Elektromaschine zugeordnete erste Elektromaschinenwelle antreibbar ist und durch eine der zweiten Elektromaschine zugeordnete zweite Elektromaschinenwelle über einen zweiten Zahnradsatz ein Fahrantriebszahnrad eines Ausgleichsgetriebes des Fahrzeugs antreibbar ist. Der erste Zahnradsatz wird dabei durch zwei ineinander greifende Stirnzahnräder ausgebildet. Das Getriebeeingangselement ist hier als eine übliche, bekannte Getriebeeingangswelle ausgebildet, die über ein Zweimassenschwungrad mit der Verbrennungskraftmaschine wirksam verbunden ist.

Aus der DE 10 2007 016 218 A1 ist eine Getriebestruktur für ein Hybridfahrzeug mit einer Verbrennungskraftmaschine und einer Elektromaschine bekannt, bei dem eine der Elektromaschine zugeordnete Elektromaschinenwelle durch eine durch die Verbrennungskraftmaschine antreibbare Antriebswelle und/oder eine Getriebeeingangswelle antreibbar ist. Dabei weist die Elektromaschinenwelle ein innenverzahntes Hohlrad auf, in das unter Bildung eines Zahnradsatzes ein Stirnzahnrad der Getriebeeingangswelle eingreift.

Die im Stand der Technik bekannten Getriebe bzw. Getriebestrukturen für Kraftfahrzeuge, insbesondere für Hybridfahrzeuge sind jedoch noch nicht optimal ausgebildet. So wird der zur Verfügung stehende Bauraum häufig nicht optimal ausgenutzt. So sind häufig die Elektromaschinenwellen oberhalb der verbrennungsmaschinellen Antriebswelle beziehungsweise der Kurbelwelle und/oder der Fahrantriebswelle und/oder in einem vorderen Fahrzeugbereich angeordnet und/oder weisen einen großen Abstand, beispielsweise von etwa 90-100 mm, zur verbrennungsmaschinellen Antriebswelle auf. Oberhalb der verbrennungsmaschinellen Antriebswelle und/oder der Fahrantriebswelle beziehungsweise insbesondere im vorderen Fahrzeugbereich bzw. Motorraum sind jedoch in der Regel noch andere Bauteile, wie Längsträger und/oder Aggregatlager und/oder Bremskraftverstärker beziehungsweise auch Fahrzeugkühler, angeordnet, welche den für die Elektromaschinen nutzbaren Bauraum und Radius entsprechend einschränken, was sich negativ auf den Wirkungsgrad der Elektromaschinen auswirken kann.

Weiterhin und dies gilt grundsätzlich im Wesentlichen für nahezu alle Getriebearten bei Kraftfahrzeugen, insbesondere auch bei Hybridfahrzeugen, weisen die Getriebe ein Getriebegehäuse und ein drehbar gelagertes Getriebeeingangselement auf, dass bei den bekannten Getrieben insbesondere als eine Getriebeeingangswelle ausgebildet ist. Hierbei wird die Getriebeeingangswelle im Bereich der Gehäusewandung gelagert und erstreckt sich zum einem in das Getriebegehäuse hinein und zum anderen aus dem Getriebegehäuse heraus. Das Getriebegehäuse ist im Allgemeinen aus mindestens einem Getriebegehäusebestandteil, insbesondere aus mehreren Getriebegehäusebestandteilen gebildet bzw. zusammengesetzt und/oder weist mindestens einen Gehäusedeckel auf. Einfach ausgedrückt, es kann beispielsweise ein Getriebegehäusebestandteil vorgesehen sein, der mit einem Gehäusedeckel verschlossen wird, oder es können zwei Getriebegehäusebestandteile zu einem Getriebegehäuse zusammengesetzt werden, oder ein Getriebegehäuse wird aus mehreren Getriebegehäusebestandteilen gebildet bzw. zusammengesetzt und zusätzlich wird auch dann noch ein Gehäusedeckel auf bestimmte Bereiche aufgebracht, um ein gesamtes Getriebegehäuse zu bilden. Das Zusammenfügen von Getriebegehäusebestandteilen zu einem Getriebegehäuse und/oder das Aufsetzen eines Gehäusedeckels auf ein oder mehreren Getriebegehäusebestandteilen wird allgemein als "Aufdeckeln" bezeichnet. Weiterhin weist das entsprechende Getriebe im Allgemeinen auch Getriebeausgangselemente, insbesondere mindestens eine Getriebeausgangswelle auf bzw. sind im Getriebe entsprechend vorgesehene und/oder angeordnete Komponenten, wie Zahnräder, weitere Getriebewellen, Schalt- und/oder Schiebemuffen, Lager oder dergleichen angeordnet und/oder vorgesehen. Das Getriebeeingangselement, insbesondere eine Getriebeeingangswelle ist durch eine Verbrennungskraftmaschine und/oder eine Elektromaschine und/oder mit Hilfe eines Zweimassenschwungrades antreibbar. Insbesondere ist das Getriebeeingangselement mit Hilfe eines Zweimassenschwungrades mit der Antriebswelle einer Verbrennungskraftmaschine wirksam verbunden bzw. verbindbar.

Insbesondere bei bestimmten Getrieben oder Getriebestrukturen für Kraftfahrzeuge, insbesondere bei den eingangs genannten seriell/parallelen Hybridfahrzeugen wird aufgrund der bereits oben beschriebenen Problematik als Komponenten eines derartigen Getriebes auch häufig innenverzahnte Hohlräder eingesetzt bzw. diese entsprechend verwendet. Derartige Hohlräder weisen im Allgemeinen einen Zahnbereich und einen Wellenstumpfbereich auf und werden mit Hilfe des Wellenstumpfbereiches mit Hilfe von Lagerelementen drehbar gelagert. Beim Aufdeckeln eines jeweiligen Getriebegehäuses und weil beim Aufdeckeln die Getriebeeingangselemente mit anderen innerhalb des Getriebegehäuses vorgesehenen Komponenten kämmen müssen, kann es dann zu einer "Zahn-auf-Zahn-Stellung" kommen, so dass das Aufdeckeln sehr arbeitsaufwändig ist bzw. mit einem großen Montageaufwand verbunden ist. Die jeweiligen Komponenten bzw. Getriebeeingangselemente müssen vor der Aufdeckelung des Getriebegehäuses in die korrekte Position verdreht werden müssen, damit die vorgenannte "Zahn-auf-Zahn-Stellung" vermieden wird und dann auch eine ordnungsgemäße Aufdeckelung des Getriebegehäuses ermöglicht ist. Die im Stand der Technik bekannten Getriebe und/oder Getriebestrukturen sind insbesondere bezüglich des Montageaufwandes bei einer erfolgenden Aufdeckelung eines Getriebegehäuses daher noch nicht optimal ausgebildet, insbesondere daher montage- und daher kostenintensiv.

Der Erfindung liegt daher die Aufgabe zu Grunde, das eingangs genannte Getriebe nun derart auszugestalten und weiterzubilden, dass der Arbeits- bzw. Montageaufwand bei einer Aufdeckelung des Getriebegehäuses und/oder die damit verbundenen Kosten verringert ist bzw. wird.

Die der Erfindung zugrunde liegende Aufgabe wird durch ein Getriebe mit den Merkmalen des Patentanspruchs 1 gelöst.

Das Getriebeeingangselement ist nun zunächst zumindest teilweise als ein Hohlrad ausgebildet. Oder anders ausgedrückt, das Getriebeeingangselement weist nun zumindest einen Bereich auf, der als ein Hohlrad ausgebildet ist. Weiterhin weist das Getriebeeingangselement einen ersten Zahnbereich und einen Wellenstumpfbereich auf. Hierbei kann der erste Zahnbereich eine oder auch mehrere Verzahnungen aufweisen. Insbesondere weist der erste Zahnbereich eine Innenverzahnung oder eine Außenverzahnung auf, insbesondere aber eine Innenverzahnung und eine Außenverzahnung auf. Im letzteren Fall sind dann die Innenverzahnung und die Außenverzahnung im Wesentlichen an dem das Hohlrad bildenden Bereich des Getriebeeingangselementes ausgebildet. Letzteres darf im Folgenden noch näher erläutert werden. Das Getriebeeingangselement, das zumindest teilweise als Hohlrad ausgebildet ist, also mindestens einen ein Hohlrad bildenden Bereich aufweist, weist weiterhin einen Wellenstumpfbereich auf. Mit Hilfe des Wellenstumpfbereiches ist das Getriebeeingangselement zumindest teilweise an einer Wandung des Getriebegehäuses und/oder des Gehäusedeckels lagerbar. Insbesondere kann dabei das Getriebegehäuse aus mehreren Getriebegehäusebestandteilen zusammengesetzt sein, so dass der Wellenstumpfbereich des Getriebeeingangselementes an einer Wandung des Getriebegehäuses, insbesondere eines Getriebegehäusebestandteiles gelagert ist. Der zuvor genannte Wellenstumpfbereich ist zumindest teilweise nun aber zweiteilig ausgebildet.

Durch die "Zweiteilung" des Wellenstumpfbereiches des Getriebeeingangselementes sind die eingangs genannten Nachteile vermieden, insbesondere ist eine Aufdeckelung eines Getriebegehäuses ohne großen Zeit- und Arbeitsaufwand ermöglicht, so dass die damit verbundenen Kosten entsprechend verringert sind. Hierzu darf auch auf die folgenden Ausführungen verwiesen werden:
Der Wellenstumpfbereich des Getriebeeingangselementes ist im montierten Zustand im Wesentlichen durch einen ersten Wellenstumpfbestandteil und durch einen zweiten Wellenstumpfbestandteil gebildet, die miteinander insbesondere fest und/oder formschlüssig drehwirksam verbunden und/oder verbindbar sind, insbesondere mit Hilfe einer Steckverzahnung und/oder auch mit Hilfe eines (zusätzlichen) Befestigungsmittels. Dadurch, dass der Wellenstumpfbereich durch einen ersten und einen zweiten Wellenstumpfbestandteil gebildet wird und der erste und der zweite Wellenstumpfbestandteil auf unterschiedliche Art und Weise ausgebildet werden können, ist eine flexible Ausgestaltung dieser Komponenten ermöglich, so dass entsprechende weitere unterschiedliche Vorteile realisierbar sind.

Der erste Wellenstumpfbestandteil, der das Hohlrad bildende Bereich und der erste Zahnbereich ist insbesondere als integraler Bestandteil hergestellt und/oder ausgebildet.

In einer ersten bevorzugten Ausführungsform ist der erste Wellenstumpfbestandteil, insbesondere nach einer erfolgten und/oder bei einer realisierten Aufdeckelung im Wesentlichen innerhalb des Getriebegehäuses angeordnet und/oder gelagert. Der zweite Wellenstumpfbestandteil ist im Wesentlichen außerhalb des Gehäuses angeordnet und/oder gelagert, insbesondere kann der zweite Wellenstumpfbestandteil einen zweiten Zahnbereich zur Realisierung einer drehwirksamen Verbindung mit einem Zweimassenschwungrad aufweisen, wobei insbesondere nach einer erfolgten Aufdeckelung und/oder Realisierung des Gehäuses der zweite Wellenstumpfbestandteil mit dem ersten Wellenstumpfbestandteil mit Hilfe eines Befestigungsmittels drehwirksam verbindbar ist. Eine Aufdeckelung und der damit verbundene Arbeitsaufwand ist vereinfacht, wobei die Verbindung des Getriebeeingangselementes zu einem Zweimassenschwungrad und/oder einer Antriebswelle, insbesondere einer Verbrennungskraftmaschine, mit Hilfe des zweiten Wellenstumpfbestandteils vereinfacht und ermöglicht ist.

Für die Ausbildung und/oder Anordnung des Hohlrades bzw. für die Ausbildung und/oder Anordnung des das Hohlrad bildenden Bereiches des Getriebeeingangselementes gibt es nun verschiedene Möglichkeiten, die im Folgenden und auch später auch nochmals unter Bezugnahme auf die Figuren näher erläutert werden dürfen:

Wie bereits oben teilweise beschrieben, weist das Getriebeeingangselement im Allgemeinen zunächst einen ersten Zahnbereich und einen Wellenstumpfbereich auf. Der erste Zahnbereich weist die Innenverzahnung und/oder zusätzlich eine Außenverzahnung auf bzw. ist der erste Zahnbereich in/an dem das Hohlrad bildenden Bereich des Getriebeeingangselementes ausgebildet, wobei mit Hilfe des Wellenstumpfbereiches des Getriebeeingangselementes das Getriebeeingangselement und das Hohlrad bzw. der das Hohlrad bildende Bereich des Getriebeeingangselementes lagerbar ist. Hierzu wird der Wellenstumpfbereich des Getriebeeingangselementes insbesondere mit Hilfe von Lagern am Getriebegehäuse, insbesondere an einem Getriebegehäusebestandteil und/oder mit Hilfe von einem Gehäusedeckel gelagert. Bei der bereits oben beschriebenen ersten bevorzugten Ausführungsform oder auch bei einer anderen noch zu beschreibenden bevorzugten Ausführungsform ist der zweite Wellenstumpfbestandteil im Wesentlichen außerhalb des Getriebegehäuses, insbesondere außerhalb eines Getriebegehäusebestandteils angeordnet und/oder gelagert. Hierbei weist der zweite Wellenstumpfbestandteil insbesondere einen - zweiten - Zahnbereich zur Realisierung einer drehwirksamen Verbindung mit dem Zweimassenschwungrad und/oder der Antriebswelle einer Verbrennungskraftmaschine auf. Insbesondere nach der bereits erwähnten erfolgten Aufdeckelung des Getriebegehäuses ist der zweite Wellenstumpfbestandteil dann mit dem ersten Wellenstumpfbestandteil drehwirksam verbindbar bzw. wird nach der entsprechenden Aufdeckelung bzw. Ausbildung des gesamten Getriebegehäuses der zweite Wellenstumpfbestandteil von außen in Richtung auf den sich im Wesentlichen im Getriebegehäuse befindenden ersten Wellenstumpfbestandteil verschoben bzw. die beiden Wellenstumpfbestandteile werden entsprechend drehwirksam miteinander verbunden.

Hierzu weist der erste Wellenstumpfbestandteil eine erste Steckverzahnung und der zweite Wellenstumpfbestandteil eine zweite Steckverzahnung auf. Über die jeweiligen Steckverzahnungen sind der erste und der zweite Wellenstumpfbestandteil miteinander drehwirksam verbindbar und/oder teilweise ineinander schiebbar. Im Endeffekt ist der erste Wellenstumpfbestandteil dann im Wesentlichen innerhalb des Getriebegehäuses, insbesondere innerhalb eines Getriebegehäusebestandteils angeordnet und/oder vorgesehen, wobei der zweite Wellenstumpfbestandteil im Wesentlichen außerhalb des Getriebegehäuses, insbesondere außerhalb eines Getriebegehäusebestandteils angeordnet ist bzw. dann vorgesehen ist. Durch die "Zweiteilung" des Wellenstumpfbereiches des Getriebeeingangselementes wird aber eine einfache Herstellung der entsprechend aufgezeigten Getriebestruktur ermöglicht, insbesondere wird eine arbeitsaufwändige Montage und/oder arbeitsaufwändige Aufdeckelung vermieden.

Bei einer weiteren zweiten bevorzugten Ausführungsform ist der zweite Wellenstumpfbestandteil als ein eine Durchgangsöffnung aufweisendes Nabenteil ausgebildet. Das Nabenteil ist auf den ersten Wellenstumpfbestandteil umfänglich aufschiebbar bzw. am äußeren Umfang des ersten Wellenstumpfbestandteils anordenbar. Insbesondere weist das Nabenteil im Querschnitt eine Stufenform auf, die eine vorteilhafte Anordnung von Dichtelementen ermöglicht. Hierbei ist der zweite Wellenstumpfbestandteil bzw. das Nabenteil mit Hilfe einer Schraubverbindung auf dem ersten Wellenstumpfbestandteil aufschraubbar. Hierbei erstreckt sich der erste Wellenstumpfbestandteil durch den zweiten Wellenstumpfbestandteil teilweise dann aus dem Getriebegehäuse heraus, wobei der zweite Wellenstumpfbestandteil im Wesentlichen innerhalb des Bereichs einer Wandung des Getriebegehäuses angeordnet ist. Insbesondere bei der zweiten bevorzugten Ausführungsform ist der zweite Zahnbereich am Außenumfang des sich aus dem Getriebegehäuse heraus erstreckenden Bereiches des ersten Wellenstumpfbestandteils ausgebildet, insbesondere mit einem Zweimassenschwungrad dann wirksam verbindbar und/oder direkt oder indirekt mit der Antriebswelle einer Verbrennungskraftmaschine verbindbar.

Bei der eingangs genannten ersten bevorzugten Ausführungsform weist der erste Wellenstumpfbestandteil eine am Außenumfang ausgebildete erste Steckverzahnung und der zweite Wellenstumpfbestandteil eine am Innenumfang ausgebildete zweite Steckverzahnung auf.

Bei einer dritten bevorzugten Ausführungsform ist diese Anordnung / Ausbildung umgekehrt, hier weist dann der erste Wellenstumpfbestandteil eine am Innenumfang ausgebildete erste Steckverzahnung und der zweite Wellenstumpfbestandteil eine am Außenumfang ausgebildete zweite Steckverzahnung auf.

Bei der entsprechenden Ausbildung des Getriebegehäuses und/oder Anordnung der entsprechenden Komponenten, insbesondere des oben beschriebenen Getriebeeingangselementes weist das Getriebeeingangselement die bereits erwähnte Innenverzahnung bzw. den das Hohlrad des Getriebeeingangselementes bildenden Bereich mit der Innenverzahnung auf, in die ein Stirnzahnrad eingreifen kann. Anders ausgedrückt, im Getriebegehäuse ist ein Stirnzahnrad vorgesehen bzw. an einer Welle, insbesondere am Kopfende einer Welle angeordnet, das mit der Innenverzahnung des Hohlrades in Eingriff bringbar ist. Vom besonderen Vorteil ist nun, dies gilt für alle bereits beschriebenen bevorzugten Ausführungsformen, dass der das Hohlrad ausbildende Bereich des Getriebeeingangselementes einen mittleren stegförmigen Bereich aufweist, der so ausgebildet ist, so dass bei einer Montage des ersten Wellenstumpfbestandteils und/oder bei einer Aufdeckelung des Getriebegehäuses eine axiale Abstützung des ersten Wellenstumpfbestandteils am Stirnzahnrad ermöglicht ist. Hierdurch ist eine einfache Montage und/oder auch eine einfache Befestigung / Anordnung des zweiten Wellenstumpfbestandteils realisierbar. Insbesondere weist der stegförmige Bereich eine auf einer Vorwölbung ausgebildete Abstützfläche auf.

Der erste Zahnbereich weist bei den bevorzugten Ausführungsformen eine Innenverzahnung und eine Außenverzahnung auf, wobei die Innen- und die Außenverzahnung durch den zuvor genannten stegförmigen Bereich getrennt bzw. gegenüberliegend zueinander ausgebildet sind.

Insbesondere ist die Mittelachse des Getriebeeingangselementes parallel versetzt zu einer ersten und/oder zu einer zweiten Elektromaschinenwelle und/oder einer weiteren Getriebewelle, insbesondere zur Mittelachse des Stirnzahnrades angeordnet. Hierbei sind die erste Elektromaschinenwelle und/oder die zweite Elektromaschinenwelle koaxial und konzentrisch zueinander angeordnet, wobei insbesondere die erste Elektromaschinenwelle als eine Innenwelle und die zweite Elektromaschinenwelle als eine Hohlwelle ausgebildet ist. Insbesondere ist dann das Stirnzahnrad drehfest auf der ersten oder auf der zweiten Elektromaschinenwelle oder auf einer entsprechenden Getriebewelle angeordnet. Die Möglichkeiten sind hier entsprechend vielfältig. Insbesondere ist das Getriebeeingangselement mit einer Verbrennungskraftmaschine direkt oder indirekt, insbesondere über ein Zweimassenschwungrad drehwirksam verbunden bzw. verbindbar.

Das zuvor beschriebene Getriebeeingangselement bzw. die entsprechende Getriebestruktur eignet sich daher insbesondere für ein seriell/paralleles Hybridfahrzeug denn so kann eine nur kleine "Desachsierung", beispielsweise von lediglich etwa 20 mm zwischen der verbrennungsmaschinellen Antriebswelle und den Elektromaschinenwellen, erzielt werden, die es ermöglicht, die Elektromaschinen nach unten und/oder vorne anzuordnen. So kann die Getriebestruktur kompakter ausgestaltet und der zur Verfügung stehende Bauraum besser ausgenutzt werden. Insbesondere kann so eine Kollision des für die Elektromaschinen erforderlichen Bauraums mit anderen Bauteilen, wie Längsträger und/oder Aggregatlager und/oder Bremskraftverstärker beziehungsweise mit dem Fahrzeugkühler und/oder der Bodengrenzlinie vermieden werden.

Im Ergebnis sind die eingangs genannten Nachteile vermieden und entsprechende Vorteile erzielt.

Es gibt nun eine Vielzahl von Möglichkeiten, die erfindungsgemäße Getriebestruktur in vorteilhafter Art und Weise auszugestalten und weiterzubilden. Hierfür darf zunächst auf die dem Patentanspruch 1 nachgeordneten Patentansprüche verwiesen werden. Im Folgenden werden einige bevorzugte Ausgestaltungen der erfindungsgemäßen Getriebestruktur anhand der Zeichnung und der dazugehörigen Beschreibung näher erläutert. In der Zeichnung zeigt:
- Fig. 1: eine erste bevorzugte Ausführungsform eines Ausschnittes eines Getriebes in schematischer Darstellung mit der Darstellung des Getriebeeingangselementes und anderer verschiedener Komponenten im montierten Zustand,
- Fig. 2: den in Fig. 1 dargestellten Ausschnitt einer erfindungsgemäßen Getriebestruktur bzw. das erfindungsgemäße Getriebeeingangselement in teils explosiver schematischer Darstellung, insbesondere nach einer erfolgten Aufdeckelung des Getriebegehäuses, aber bevor der zweite Wellenstumpfbestandteil mit dem ersten Wellenstumpfbestandteil wirksam verbunden ist,
- Fig. 3: eine zweite bevorzugte Ausführungsform in schematischer Darstellung im montierten Zustand, wobei hier nur ausschnittsweise ein Getriebe mit den entsprechenden Komponenten dargestellt ist,
- Fig. 4: die in Fig. 3 dargestellten Komponenten kurz vor der Aufdeckelung des Getriebegehäuses bzw. der erste und zweite Wellenstumpfbestandteil im noch nicht montierten Zustand in schematischer Darstellung,
- Fig. 5: eine dritte bevorzugte Ausführungsform in schematischer Darstellung, nämlich einen Ausschnitt eines Getriebegehäuses in entsprechender schematischer Darstellung.

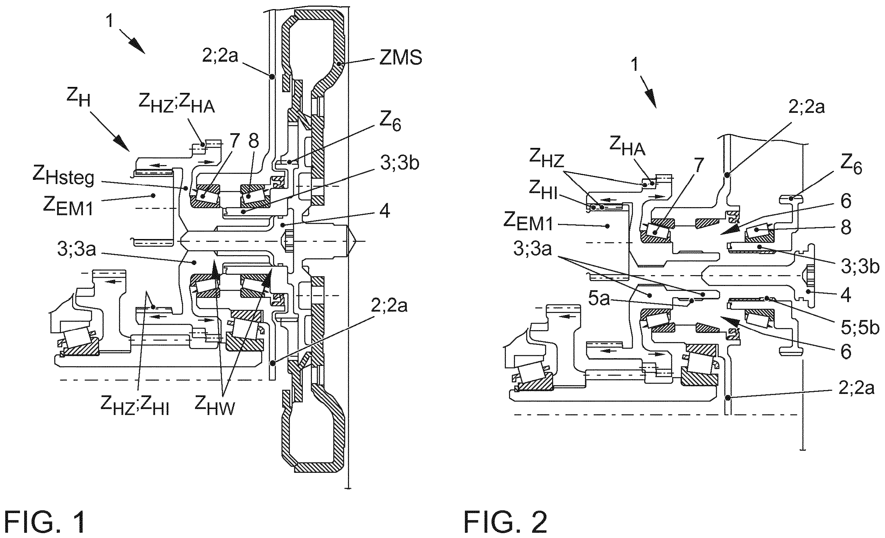

Die Fig. 1 bis 5 zeigen zumindest teilweise ein Getriebe 1 für ein hier nicht näher dargestelltes Kraftfahrzeug, insbesondere für ein seriell/paralleles Hybridfahrzeug. Das Kraftfahrzeug ist hier nicht im Einzelnen dargestellt. Auch das Getriebe 1 ist hier nur teilweise, nämlich ausschnittsweise, in den Fig. 1 bis 5 dargestellt.

Das Getriebe 1 weist mindestens ein Getriebegehäuse 2 und mindestens einen drehbar gelagertes Getriebeeingangselement 3 auf. Das Getriebe 1 weist auch weitere Komponenten auf, von denen hier in den Fig. 1 bis 5 nicht alle mit Bezugszeichen versehen sind, wie beispielsweise Lager, weitere Zahnräder, Getriebewellen oder dergleichen. Auch ist das Getriebe 1 nicht vollständig bzw. nicht mit allen Komponenten dargestellt. Bei den in den Fig. 1 bis 5 gewählten Darstellungen ist "das Innere" des Getriebegehäuses 2 im Wesentlichen links und "das Äußere" des Getriebegehäuses 2 im Wesentlichen rechts von der in den Fig. 1 bis 5 erkennbaren Wandung 2a des Getriebegehäuses 2 vorgesehen bzw. ausgebildet.

Das in den Fig. 1 bis 5 nur teilweise dargestellte Getriebegehäuse 2 ist aus mindestens einem Getriebegehäusebestandteil, insbesondere aber hier aus mehreren Getriebegehäusebestandteilen gebildet. Anders ausgedrückt, das in den Fig. 1 bis 5 nicht komplett dargestellte Getriebegehäuse 2 kann aus mehreren Getriebegehäusebestandteilen realisiert bzw. zusammengesetzt sein bzw. werden oder mindestens einen oder auch mehrere Gehäusedeckel aufweisen, der bzw. die dann das gesamte Getriebegehäuse 2 bilden. Die hier in den Fig. 1 bis 5 dargestellte Wandung 2a des Getriebegehäuses 2 ist hier insbesondere Bestandteil eines zweiten Getriebegehäusebestandteils, der auf einen ersten Getriebegehäusebestandteil, der in den Fig. 1 bis 5 nicht dargestellt ist, aufgesetzt wird bzw. entsprechend mit diesem verbunden ist bzw. wird. Ein derartiger Getriebegehäusebestandteil kann auch als ein Elektromaschinengehäuse ausgeführt sein.

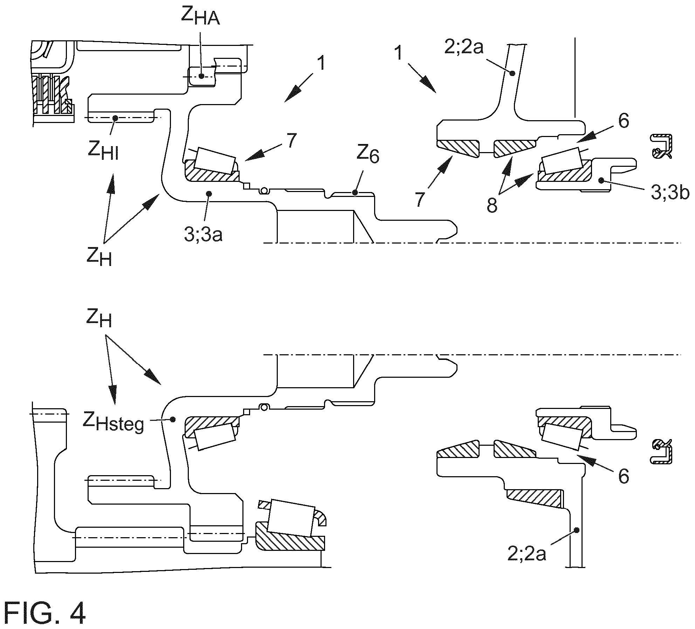

Anders ausgedrückt, insbesondere die Fig. 2 und 4 zeigen die "Aufdeckelung" eines Getriebegehäuses 2, hier die Montage eines ersten und zweiten Getriebegehäusebestandteils, wobei hier nur die Wandung 2a eines zweiten Getriebegehäusebestandteils dargestellt ist, der auf einem ersten nicht dargestellten Getriebegehäusebestandteil montiert bzw. angeordnet wird. Bei der Montage des zweiten Getriebegehäusebestandteils wird eine Verschiebung der Wandung 2a bzw. des durch die Wandung 2a dargestellten Getriebegehäusebestandteils von rechts nach links in den Fig. 2 und 4 realisiert. Hingegen zeigen die Fig. 1, 3 und 5 den jeweiligen aufgedeckelten Zustand bzw. das entsprechend montierte Getriebegehäuse 2.

Das in den Fig. 1 bis 5 dargestellte Getriebeeingangselement 3 ist insbesondere durch eine Verbrennungskraftmaschine, die hier nicht dargestellt ist, und/oder eine Elektromaschine, die hier ebenfalls nicht dargestellt ist, und/oder mit Hilfe eines Zweimassenschwungrades ZMS, welches in die Fig. 1, 3 und 5 zumindest teilweise dargestellt ist, antreibbar.

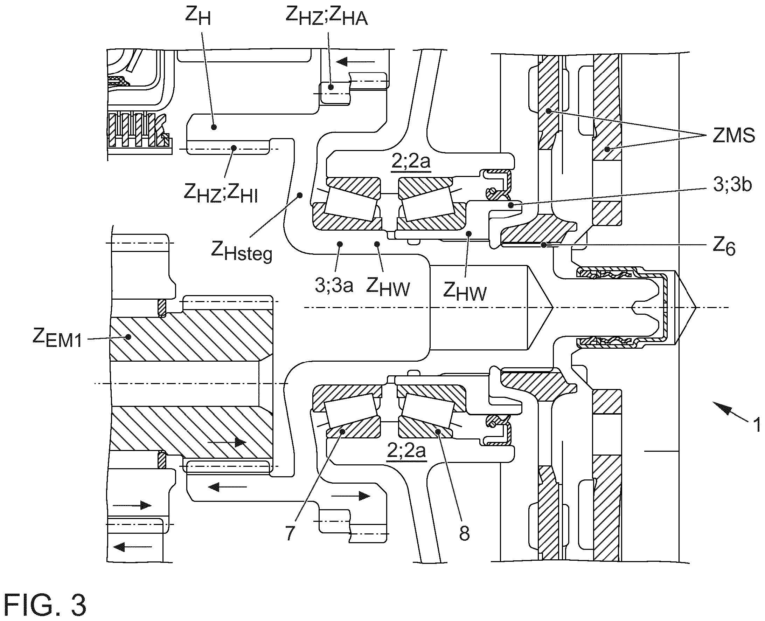

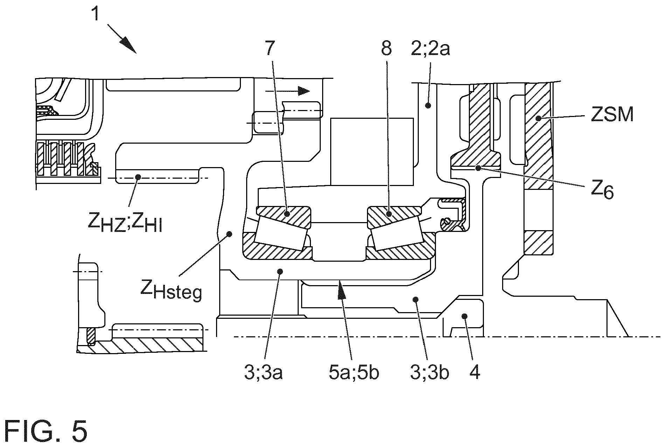

Die Fig. 1 und 2 zeigen eine erste bevorzugte Ausführungsform der erfindungsgemäßen Getriebestruktur bzw. des erfindungsgemäßen Getriebeeingangselementes 3, wohingegen die Fig. 3 und 4 eine zweite bevorzugte Ausführungsform der erfindungsgemäßen Getriebestruktur und/oder des erfindungsgemäßen Getriebeeingangselementes 3 zeigen, sowie die Fig. 5 schließlich eine entsprechende dritte bevorzugte Ausführungsform zeigt.

Die eingangs genannten Nachteile sind nun zunächst dadurch vermieden, dass das Getriebeeingangselement 3 zumindest teilweise als ein Hohlrad Z_{H} ausgebildet ist, dass das Getriebeeingangselement 3 einen ersten Zahnbereich Z_{HZ} und einen Wellenstumpfbereich Z_{HW} aufweist, wobei der erste Zahnbereich Z_{HZ} eine Innenverzahnung Z_{HI} und/oder eine Außenverzahnung Z_{HA} aufweist, wobei mit Hilfe des Wellenstumpfbereiches Z_{HW} das Getriebeeingangselement 3 zumindest teilweise an einer Wandung 2a des Getriebegehäuses 2 und/oder des Gehäusedeckels lagerbar ist, und wobei der Wellenstumpfbereich Z_{HW} zumindest teilweise zweiteilig ausgebildet ist. Hierdurch sind zunächst die eingangs genannten Nachteile vermieden und die entsprechenden Vorteile erzielt. Insbesondere ist eine Aufdeckelung des Getriebegehäuses 2 auf einfache Weise ermöglicht, was im Folgenden näher erläutert werden darf:

Der Wellenstumpfbereich Z_{HW} des Getriebeeingangselementes 3 ist im montierten Zustand durch einen ersten Wellenstumpfbestandteil 3a und durch einen zweiten Wellenstumpfbestandteil 3b gebildet, die miteinander drehwirksam verbunden und/oder verbindbar sind. Dies gilt im Wesentlichen für alle in den Fig. 1 bis 5 dargestellten Ausführungsformen.

Weiterhin ist aus den Fig. 1 bis 5 deutlich ersichtlich, dass der erste Wellenstumpfbestandteil 3a den das Hohlrad Z_{H} bildenden Bereich aufweist bzw. dieser Bereich als integraler Bestandteil des ersten Wellenstumpfbestandteils 3a hergestellt und/oder ausgebildet ist. Oder anders ausgedrückt, der erste Wellenstumpfbestandteil 3a weist, insbesondere an dem als Hohlrad Z_{H} ausgebildeten Bereich, den ersten Zahnbereich Z_{HZ} auf, wobei dieser erste Zahnbereich Z_{HZ} insbesondere einerseits eine Innenverzahnung Z_{HI} und eine Außenverzahnung Z_{HA} aufweist, wie dieses aus den Fig. 1 bis 5 ersichtlich ist.

Die Fig. 1 und 2 zeigen die erste bevorzugte Ausführungsform, wobei hier der erste Wellenstumpfbestandteil 3a, insbesondere nach einer erfolgten und/oder bei einer realisierten Aufdeckelung, wie in Fig. 1 dargestellt, im Wesentlichen innerhalb des Getriebegehäuses 2 angeordnet und/oder gelagert ist. Wie die Fig. 1 und 2 auch deutlich machen, ist der zweite Wellenstumpfbestandteil 3b im Wesentlichen außerhalb des Getriebegehäuses 2 angeordnet und/oder gelagert, insbesondere weist der zweite Wellenstumpfbestandteil 3b einen zweiten Zahnbereich Z₆ zur Realisierung einer drehwirksamen Verbindung mit einem Zweimassenschwungrad ZMS auf. Während Fig. 2 den Zustand bei Aufdeckelung des Getriebegehäuses 2 zeigt, zeigt die Fig. 1 den bereits erfolgten aufgedeckelten Zustand des Getriebegehäuses 2.

Insbesondere nach einer erfolgten Aufdeckelung und/oder Realisierung des Getriebegehäuses 2 ist der zweite Wellenstumpfbestandteil 3b mit dem ersten Wellenstumpfbestandteil 3a mit Hilfe eines Befestigungsmittels 4 insbesondere zusätzlich fest verbindbar. Wie die Fig. 1 und 2 zeigen, weist der erste Wellenstumpfbestandteil 3a eine erste Steckverzahnung 5a und der zweite Wellenstumpfbestandteil 3b eine zweite Steckverzahnung 5b auf, wobei über die jeweiligen Steckverzahnungen 5a, 5b der erste und zweite Wellenstumpfbestandteil 3a und 3b miteinander drehwirksam, insbesondere fest drehwirksam verbindbar und/oder zumindest teilweise ineinander schiebbar sind. Hierbei ist bei der ersten bevorzugten Ausführungsform, wie in den Fig. 1 und 2 dargestellt, die erste Steckverzahnung 5a am Außenumfang des ersten Wellenstumpfbestandteils 3a und die zweite Steckverzahnung 5b am Innenumfang des zweiten Wellenstumpfbestandteils 3b ausgebildet. Mit Verweis auf die in der Fig. 5 dargestellte dritte bevorzugte Ausführungsform darf an dieser Stelle darauf hingewiesen werden, dass die hier dargestellten Steckverzahnungen 5a und 5b "anders herum" als bei der ersten bevorzugten Ausführungsform ausgebildet sind. Bei der dritten bevorzugten Ausführungsform, dargestellt in Fig. 5, ist die erste Steckverzahnung 5a am Innenumfang des ersten Wellenstumpfbestandteils 3a und die zweite Steckverzahnung 5b am Außenumfang des zweiten Wellenstumpfbestandteils 3b ausgebildet. An dieser Stelle darf auch darauf hingewiesen werden, dass die zur der ersten bevorzugten Ausführungsform, dargestellt in den Fig. 1 und 2, gemachten Ausführungen grundsätzlich, insbesondere mit Ausnahme der Ausbildung der Steckverzahnungen, auch gelten für die in Fig. 5 dargestellte dritte bevorzugte Ausführungsform.

Die Fig. 1 bis 5 machen weiterhin deutlich, dass der erste Wellenstumpfbestandteil 3a und der erste Zahnbereich Z_{HZ} als integraler Bestandteil hergestellt und/oder ausgebildet ist bzw. der erste Wellenstumpfbestandteil 3a, hier insbesondere an seinem linken Ende den ein Hohlrad Z_{H} bildenden Bereich als integralen Bestandteil aufweist. Insbesondere nach einer erfolgten und/oder nach einer realisierten Aufdeckelung des Getriebegehäuses 2, nämlich insbesondere nach Anordnung des hier durch die Wandung 2a dargestellten zweiten Getriebegehäusebestandteils auf einem, hier nicht dargestellten ersten Getriebegehäusebestandteil, befindet sich der erste Wellenstumpfbestandteil 3a im Wesentlichen innerhalb des Getriebegehäuses 2 bzw. ist hier entsprechend angeordnet. Hierbei ist mit dem Ausdruck "im Wesentlichen" gemeint, dass zunächst der erste Zahnbereich Z_{HZ} bzw. der das Hohlrad Z_{H} bildende Bereich innerhalb des Getriebegehäuses 2 liegt, wobei der Wellenstumpfbereich dieses so gebildeten Bauteils im Bereich der Durchtrittsöffnung 6 des Getriebegehäuses 2 vorgesehen und/oder angeordnet bzw. gelagert ist, wie dies insbesondere aus den Fig. 1, 2 und 5 ersichtlich ist.

Mit Hilfe des entsprechenden Befestigungsmittels 4, wie in den Fig. 1, 2 und 5 bei der dortigen ersten und dritten bevorzugten Ausführungsform dargestellt, ist dann der erste und zweite Wellenstumpfbestandteil 3a und 3b in ihrer jeweiligen Längsausrichtung zueinander entsprechend fixiert bzw. wird über die jeweilige Steckverzahnung 5a und 5b drehwirksam fest und/oder formschlüssig miteinander verbunden.

Die Fig. 3 und 4 zeigen eine weitere bevorzugte zweite Ausführungsform des Getriebeeingangselementes 3. Fig. 3 und 4 zeigt ein Getriebeeingangselement 3 mit einem ersten und zweiten Wellenstumpfbestandteil 3a und 3b. Der zweite Wellenstumpfbestandteil 3b ist als ein eine Durchgangsöffnung aufweisendes Nabenteil ausgebildet, wobei das Nabenteil auf den ersten Wellenstumpfbestandteil 3a umfänglich aufschiebbar ist bzw. am äußeren Umfang des ersten Wellenstumpfbestandteils 3a anordenbar ist. Hierzu ist insbesondere eine Schraubverbindung vorgesehen bzw. weist der erste Wellenstumpfbestandteil 3a ein Außengewinde und der zweite Wellenstumpfbestandteil 3b ein Innengewinde auf, so dass der zweite Wellenstumpfbestandteil 3b auf den ersten Wellenstumpfbestandteil 3a aufschraubbar ist, so wie dies in Fig. 3 dargestellt ist.

Die Fig. 3 und 4 zeigen weiter, dass sich der erste Wellenstumpfbestandteil 3a mit seinem rechten Bereich im Wesentlichen durch den zweiten Wellenstumpfbestandteil 3b teilweise erstreckt, teilweise aus dem Getriebegehäuse 2 heraus erstreckt und der zweite Wellenstumpfbestandteil 3b im Wesentlichen innerhalb des Bereiches der in Fig. 3 dargestellten Wandung 2a des Getriebegehäuses 2 angeordnet ist. Weiterhin ist aus Fig. 3 und 4 deutlich erkennbar, dass der zweite Zahnbereich Z₆ am Außenumfang des sich aus dem Getriebegehäuse 2 heraus erstreckenden Bereiches des ersten Wellenstumpfbestandteils 3a ausgebildet ist, insbesondere dann mit einem Zweimassenschwungrad ZMS wirksam verbindbar ist, wie in Fig. 3 dargestellt.

Weiterhin darf darauf hingewiesen werden, dass bei der zweiten Ausführungsform, dargestellt in den Fig. 3 und 4, der zweite Wellenstumpfbestandteil 3b im Wesentlichen eine Stufenform aufweist, hierzu darf weiter unten noch näheres ausgeführt werden, insbesondere wenn auf die jeweilige Lagerung bzw. auf die Lagerelemente der in den Fig. 1 bis 5 dargestellten Ausführungsformen nochmals eingegangen wird.

Allen in den Fig. 1 bis 5 dargestellten Ausführungsformen ist im Wesentlichen gemeinsam, dass ein in die Innenverzahnung Z_{HI} des Getriebeeingangselementes 3 (bzw. des Hohlrades Z_{H}) eingreifendes Stirnzahnrad Z_{EM1} vorgesehen bzw. vorhanden ist. Weiterhin ist erkennbar, dass der das Hohlrad Z_{H} ausbildende Bereich des Getriebeeingangselementes 3 einen mittleren stegförmigen Bereich Z_{Hsteg} aufweist. Dieser stegförmige Bereich Z_{Hsteg} ist so ausgebildet, so dass bei einer Montage des ersten Wellenstumpfbestandteils 3a und/oder bei einer Aufdeckelung des Getriebegehäuses 2 eine axiale Abstützung des ersten Wellenstumpfbestandteils 3a am Stirnzahnrad Z_{EM1} ermöglicht ist, so wie in der Fig. 2 dargestellt. Anders ausgedrückt, vor der Aufdeckelung des Getriebegehäuses 2, also vor der Bewegung der in den Fig. 1 bis 5 dargestellten Wandung 2a des dargestellten Getriebegehäusebestandteils von rechts nach links, wird zunächst der erste Wellenstumpfbestandteil 3a des Getriebeeingangselementes 3 innerhalb des Getriebegehäuses 2 so angeordnet und/oder platziert, dass die entsprechenden Zähne / Zahnbereiche miteinander kämmen, wobei dann der stegförmige Bereich Z_{Hsteg} an dem Stirnzahnrad Z_{EM1} zur Anlage kommt. Hiernach erfolgt die Aufdeckelung des Getriebegehäuses 2, also im Grunde die Verschiebung / Bewegung der in den Fig. 2 und 4 dargestellten Wandung 2a von rechts nach links und hiernach dann die Anordnung und Befestigung des zweiten Wellenstumpfbestandteils 3b, insbesondere auch mit Hilfe des Befestigungsmittels 4, wie insbesondere auch aus den Fig. 1, 2 und 5 ersichtlich.

Wie die Fig. 1 bis 5 zeigen sind für die Lagerung des Getriebeeingangselementes 3 bzw. des ersten und zweiten Wellenstumpfbestandteils 3a und 3b Lagerelemente 7 und 8 vorgesehen bzw. innerhalb der Durchtrittsöffnung 6 der Wandung 2a angeordnet. Diese Lagerelemente 7 und 8 können teilweise auf dem ersten bzw. auf dem zweiten Wellenstumpfbestandteil 3a und 3b und/oder innerhalb der Durchtrittsöffnung 6 der Wandung 2 vormontiert sein, wie insbesondere in den Fig. 2 und 4 ersichtlich dargestellt. Durch die Aufteilung der Lagerelemente 7, 8 bzw. der jeweiligen Lagerkomponenten der Lagerelemente 7, 8 wird auch die Montage entsprechend vereinfacht.

Den in den Fig. 1 bis 5 dargestellten Ausführungsformen ist weiterhin gemeinsam, dass der erste Zahnbereich Z_{HZ} bzw. das Hohlrad Z_{H} bzw. der das Hohlrad Z_{H} bildende Bereich des ersten Wellenstumpfbestandteils 3a des Getriebeeingangselementes 3 eine Innenverzahnung Z_{HI} und eine Außenverzahnung Z_{HA} aufweist, wobei die Innen- und Außerverzahnung Z_{HI} und Z_{HA} durch den stegförmigen Bereich Z_{Hsteg} getrennt und jeweils gegenüberliegend zueinander ausgebildet sind, so wie aus den Fig. 1 bis 5 ersichtlich.

Durch die in den Fig. 1 bis 5 erkennbare Anordnung der Komponenten kann die Mittelachse des Getriebeeingangselementes 3 parallel versetzt werden zu einer ersten und/oder zu einer zweiten Elektromaschinenwelle und/oder einer weiteren Getriebewelle, insbesondere zur Mittelachse des hier in den Fig. 1 bis 5 dargestellten Stirnrades Z_{EM1}.
Insbesondere bei einem seriell/parallelen Hybridfahrzeug kann die erste Elektromaschinenwelle und/oder die zweite Elektromaschinenwelle koaxial und konzentrisch zueinander angeordnet sein. Hierbei ist insbesondere dann die erste Elektromaschinenwelle als eine Innenwelle und die zweite Elektromaschinenwelle als eine Hohlwelle ausgeführt. Insbesondere kann das Stirnrad Z_{EM1} drehfest auf der ersten oder der zweiten Elektromaschinenwelle oder auch auf einer anderen entsprechenden Getriebewelle angeordnet sein, je nach spezifischer Ausführung des Getriebes des Kraftfahrzeuges. Das Getriebeeingangselement 3 ist insbesondere mit einer Verbrennungskraftmaschine, insbesondere über ein Zweimassenschwungrad ZMS drehwirksam verbunden bzw. ist zur Realisierung der entsprechenden Drehmomente und Drehzahlen das Getriebeeingangselement 3, das sich teilweise aus dem Getriebegehäuse 2 heraus erstreckt, mit einem entsprechenden Antrieb drehwirksam verbunden bzw. verbindbar.

Unter Bezugnahme auf die Fig. 1 bis 5 darf nochmals darauf hingewiesen werden, dass der Bereich rechts von der dort erkennbaren Wandung 2a des Getriebegehäuses 2 außerhalb des Getriebegehäuses 2 liegt und der Bereich links von der dort erkennbaren Wandung 2a im Wesentlichen den Innenraum des Getriebegehäuses 2 bildet bzw. darstellen soll und/oder hier die jeweiligen Komponenten des Getriebes 1, wie weitere Zahnräder, Getriebewellen oder dergleichen angeordnet sind.

Mit dem hier in die Fig. 1 bis 5 dargestellten Getriebeeingangselement 3 kann die in den Fig. 1 bis 5 dargestellte jeweilige Getriebestruktur bzw. das entsprechende Getriebe 1 auf einfache Art und Weise hergestellt, insbesondere montiert werden. Da vor der Aufdeckelung des Getriebegehäuses 2 der erste Wellenstumpfbestandteil 3a des Getriebeeingangselementes 3 innerhalb des Getriebegehäuses 2 so angeordnet werden kann, dass die Verzahnung der Komponenten miteinander kämmen und sich eben nicht stumpf (Zahn auf Zahn) gegenüber liegen, erfolgt die Aufdeckelung des Getriebegehäuses 2 mit sehr geringem Arbeitsaufwand und die Montage ist vereinfacht. Nach der Aufdeckelung wird dann der zweite Wellenstumpfbestandteil 3b des Getriebeeingangselementes 3 entsprechend montiert, so wie bei den unterschiedlichen Ausführungsformen der Fig. 1 bis 5 dargestellt bzw. beschrieben. Anders ausgedrückt, nachdem die innerhalb des Getriebegehäuses 2 angeordneten jeweiligen Komponenten (Zahnräder, Verzahnungen etc.), insbesondere der erste Wellenstumpfbestandteil 3a bzw. das Hohlrad Z_{H} mit den anderen Komponenten kämmen, kann nach der Aufdeckelung dann einfach nur der zweite Wellenstumpfbestandteil 3b mit dem ersten Wellenstumpfbestandteil 3a drehwirksam, insbesondere fest oder formschlüssig verbunden werden, ohne dass weitere Komponenten zusätzlich verdreht werden müssen. Hierdurch sind entsprechende Vorteile realisiert und der Kostenaufwand ist stark minimiert.

Weiterhin darf insbesondere auch unter Bezugnahme auf die Fig. 1, 2 und 5 an dieser Stelle darauf hingewiesen werden, dass der zweite Wellenstumpfbestandteil 3b im Wesentlichen außerhalb des Getriebegehäuses 2 angeordnet und/oder gelagert ist. Insbesondere weist der zweite Wellenstumpfbestandteil 3b einen zweiten Zahnbereich Z₆ auf, der zur Realisierung einer drehwirksamen Verbindung mit einem Zweimassenschwungrad, insbesondere mit dem Zweimassenschwungrad ZMS ausgebildet ist, wie in den Fig. 1, 2 und 5 dargestellt. Mit dem Ausdruck "im Wesentlichen" ist hier gemeint, dass ein Teilbereich des zweiten Wellenstumpfbestandteils 3b, insbesondere der zweite Zahnbereich Z₆ außerhalb des Getriebegehäuses 2, insbesondere außerhalb des Getriebegehäuses 2 und/oder auch außerhalb der hier in den Figuren schematisch dargestellten Durchtrittsöffnung 6 angeordnet ist, wobei sich der andere Teilbereich des zweiten Wellenstumpfbestandteils 3b teilweise in die Durchtrittsöffnung 6 des Getriebegehäuses 2 erstreckt bzw. erstrecken kann, wenn der erste und der zweite Wellenstumpfbestandteil 3a und 3b drehwirksam miteinander verbunden sind.

### Bezugszeichenliste

- Z_{H}: Hohlrad
- Z_{HI}: Innenverzahnung
- Z_{HA}: Außenverzahnung
- Z_{Hsteg}: stegförmiger Bereich
- Z_{EM1}: Stirnzahnrad, insbesondere einer Elektromaschinenwelle
- Z_{HZ}: erster Zahnbereich
- Z_{HW}: Wellenstumpfbereich
- Z₆: zweiter Zahnbereich
- ZMS: Zweimassenschwungrad

- 1: Getriebe
- 2: Getriebegehäuse
- 2a: Wandung
- 3: Getriebeeingangselement
- 3a: erster Wellenstumpfbestandteil
- 3b: zweiter Wellenstumpfbestandteil
- 4: Befestigungsmittel
- 5a: erste Steckverzahnung
- 5b: zweite Steckverzahnung
- 6: Durchtrittsöffnung
- 7: Lager
- 8: Lager

## Patentansprüche

1. Getriebe (1) für ein Kraftfahrzeug, insbesondere für ein seriell/paralleles Hybridfahrzeug, mit mindestens einem Getriebegehäuse (2) und mit mindestens einem drehbar gelagertem Getriebeeingangselement (3), wobei das gesamte Getriebegehäuse (2) aus mindestens einem Getriebegehäusebestandteil oder aus mehreren Getriebegehäusebestandteilen und/oder mindestens einem Gehäusedeckel zusammengesetzt ist, wobei das Getriebeeingangselement (3) durch eine Verbrennungskraftmaschine und/oder eine Elektromaschine und/oder mit Hilfe eines Zweimassenschwungrades (ZMS) antreibbar ist, wobei das Getriebeeingangselement (3) zumindest teilweise als ein Hohlrad (Z_{H}) ausgebildet ist, wobei das Getriebeeingangselement (3) einen ersten Zahnbereich (Z_{HZ}) und einen Wellenstumpfbereich (Z_{HW}) aufweist, wobei der erste Zahnbereich (Z_{HZ}) eine Innenverzahnung (Z_{HI}) und/oder eine Außenverzahnung (Z_{HA}) aufweist und wobei mit Hilfe des Wellenstumpfbereiches (Z_{HW}) das Getriebeeingangselement (3) zumindest teilweise an einer Wandung des Getriebegehäuses (2) und/oder des Gehäusedeckels lagerbar ist, **dadurch gekennzeichnet, dass** der Wellenstumpfbereich (Z_{HW}) zumindest teilweise zweiteilig ausgebildet istund, dass der Wellenstumpfbereich (Z_{HW}) des Getriebeeingangselementes (3) im montierten Zustand zumindest durch einen ersten Wellenstumpfbestandteil (3a) und durch einen zweiten Wellenstumpfbestandteil (3b) gebildet ist, die miteinander fest und/oder formschlüssig drehwirksam verbunden sind, dass der erste Wellenstumpfbestandteil (3a) und der erste Zahnbereich (Z_{HZ}) als integraler Bestandteil hergestellt und/oder ausgebildet ist und der erste Wellenstumpfbestandteil (3a) den das Hohlrad (Z_{H}) bildenden Bereich des Getriebeelementes (3) aufweist.

2. Getriebe nach Anspruch 1, **dadurch gekennzeichnet, dass** der erste Wellenstumpfbestandteil (3a), insbesondere nach einer erfolgten und/oder bei einer realisierten Aufdeckelung, im Wesentlichen innerhalb des Getriebegehäuses (2), angeordnet und/oder gelagert ist.

3. Getriebe nach einem der Ansprüche 1 oder 2, **dadurch gekennzeichnet, dass** der zweite Wellenstumpfbestandteil (3b) im Wesentlichen außerhalb des Getriebegehäuses (2) angeordnet und/oder gelagert ist, insbesondere der zweite Wellenstumpfbestandteil (3b) einen zweiten Zahnbereich (Z₆) zur Realisierung einer drehwirksamen Verbindung mit einem Zweimassenschwungrad (ZMS) bzw. mit einer Verbrennungskraftmaschine aufweist, insbesondere nach einer erfolgten Aufdeckelung und/oder Realisierung des Getriebegehäuses (2) der zweite Wellenstumpfbestandteil (3b) mit dem ersten Wellenstumpfbestandteil (3a) mit Hilfe eines Befestigungsmittels (4) drehwirksam verbunden ist.

4. Getriebe nach einem der Ansprüche 1 bis 3, **dadurch gekennzeichnet, dass** der erste Wellenstumpfbestandteil (3a) eine erste Steckverzahnung (5a) und der zweite Wellenstumpfbestandteil (3b) eine zweite Steckverzahnung (5b) aufweist, wobei über die jeweiligen Steckverzahnungen (5a, 5b) der erste und zweite Wellenstumpfbestandteil (3a, 3b) miteinander drehwirksam, insbesondere fest oder formschlüssig drehwirksam verbunden und/oder zumindest teilweise ineinander verschoben sind.

5. Getriebe nach einem der Ansprüche 1 bis 2 oder 4, **dadurch gekennzeichnet, dass** der zweite Wellenstumpfbestandteil (3b) als ein eine Durchgangsöffnung aufweisendes Nabenteil ausgebildet ist, wobei das Nabenteil auf den ersten Wellenstumpfbestandteil (3a) umfänglich aufgeschoben ist bzw. am äußeren Umfang des ersten Wellenstumpfbestandteils (3a) anordenbar ist, insbesondere mit Hilfe einer Schraubverbindung der zweite Wellenstumpfbestandteil (3b) auf dem ersten Wellenstumpfbestandteil (3a) aufgeschraubt ist.

6. Getriebe nach Anspruch 5, **dadurch gekennzeichnet, dass** sich der erste Wellenstumpfbestandteil (3a) durch den zweiten Wellenstumpfbestandteil (3b) teilweise aus dem Getriebegehäuse (2) heraus erstreckt und der zweite Wellenstumpfbestandteil (3b) im Wesentlichen innerhalb des Bereiches einer Wandung (2a) des Getriebegehäuses (2) angeordnet ist.

7. Getriebe nach Anspruch 5 oder 6, **dadurch gekennzeichnet, dass** der zweite Zahnbereich (Z₆) am Außenumfang des sich aus dem Getriebegehäuse (2) heraus erstreckenden Bereiches des ersten Wellenstumpfbestandteiles (3a) ausgebildet ist, insbesondere mit einem Zweimassenschwungrad (ZMS) bzw. mit einer Verbrennungskraftmaschine wirksam verbunden ist.

8. Getriebe nach einem der Ansprüche 1 bis 7, **dadurch gekennzeichnet, dass** ein in die Innenverzahnung (Z_{HI}) des Getriebeeingangselementes (3) (bzw. des Hohlrades (Z_{H})) eingreifendes Stirnzahnrad (Z_{EM1}) vorgesehen bzw. vorhanden ist.

9. Getriebe nach Anspruch 8, **dadurch gekennzeichnet, dass** der das Hohlrad (Z_{H}) ausbildende Bereich des Getriebeeingangselementes (3) einen mittleren stegförmigen Bereich (Z_{Hsteg}) aufweist, der so ausgebildet ist, so dass bei einer Montage des ersten Wellenstumpfbestandteiles (3a) und/oder bei einer Aufdeckelung des Getriebegehäuses (2) eine axiale Abstützung des ersten Wellenstumpfbestandteiles (3a) am Stirnzahnrad (Z_{EM1}) ermöglicht ist.

10. Getriebe nach einem der Ansprüche 1 bis 9, **dadurch gekennzeichnet, dass** der erste Zahnbereich (Z_{HZ}) eine Innenverzahnung (Z_{HI}) und eine Außenverzahnung (Z_{HA}) aufweist, wobei die Innen- und Außenverzahnung (Z_{HI}, Z_{HA}) durch den stegförmigen Bereich (Z_{Hsteg}) getrennt und im Wesentlichen gegenüberliegend zueinander ausgebildet sind.

11. Getriebe nach einem der vorstehenden Ansprüche, **dadurch gekennzeichnet, dass** die Mittelachse des Getriebeeingangselementes (3) parallel versetzt zu einer ersten und/oder zu einer zweiten Elektromaschinenwelle und/oder einer weiteren Getriebewelle, insbesondere zur Mittelachse des Stirnrades angeordnet ist.

12. Getriebe nach einem der vorstehenden Ansprüche, **dadurch gekennzeichnet, dass** eine erste Elektromaschinenwelle und/oder eine zweite Elektromaschinenwelle koaxial und konzentrisch zueinander angeordnet sind, insbesondere wobei die erste Elektromaschinenwelle als eine Innenwelle und die zweite Elektromaschinenwelle als eine Hohlwelle ausgeführt ist, und wobei das Stirnzahnrad drehfest auf der ersten oder der zweiten Elektromaschinenwelle angeordnet ist.

13. Getriebe nach einem der vorstehenden Ansprüche, **dadurch gekennzeichnet, dass** das Getriebeeingangselement (3) mit einer Verbrennungskraftmaschine drehwirksam verbunden ist.

## Claims

1. Transmission (1) for a motor vehicle, in particular for a series/parallel hybrid vehicle, having at least one transmission housing (2) and having at least one rotatably mounted transmission input element (3), wherein the entire transmission housing (2) is assembled from at least one transmission housing part or from multiple transmission housing parts and/or at least one housing cover, wherein the transmission input element (3) can be driven by an internal combustion engine and/or an electric machine and/or via a dual-mass flywheel (ZMS), wherein the transmission input element (3) is formed at least partially as an internal gear (Z_{H}), wherein the transmission input element (3) has a first toothed region (Z_{HZ}) and a shaft stub region (Z_{HW}), wherein the first toothed region (Z_{HZ}) has an internal toothing (Z_{HI}) and/or an external toothing (Z_{HA}), and wherein, by means of the shaft stub region (Z_{HW}), the transmission input element (3) can be mounted at least partially on a wall of the transmission housing (2) and/or of the housing cover, **characterized in that** the shaft stub region (Z_{HW}) is at least partially of two-part form and **in that** the shaft stub region (Z_{HW}) of the transmission input element (3) is, in the assembled state, formed at least by a first shaft stub part (3a) and by a second shaft stub part (3b) which are rotationally operatively connected fixedly and/or in positively locking fashion to one another, **in that** the first shaft stub part (3a) and the first toothed region (Z_{HZ}) are produced and/or formed as an integral part, and the first shaft stub region (3a) has that region of the transmission element (3) which forms the internal gear (Z_{H}).

2. Transmission according to Claim 1, **characterized in that** the first shaft stub part (3a) is arranged and/or mounted substantially within the transmission housing (2), in particular after a cover-fitting process has been performed and/or implemented.

3. Transmission according to either of Claims 1 or 2, **characterized in that** the second shaft stub part (3b) is arranged and/or mounted substantially outside the transmission housing (2), in particular, the second shaft stub part (3b) has a second toothed region (Z₆) for implementing a rotationally operative connection to a dual-mass flywheel (ZMS) or to an internal combustion engine, in particular, the second shaft stub part (3b) is rotationally operatively connected to the first shaft stub part (3a) by a fastening means (4) after a cover-fitting process has been performed and/or the transmission housing (2) has been implemented.

4. Transmission according to any of Claims 1 to 3, **characterized in that** the first shaft stub part (3a) has a first spline toothing (5a) and the second shaft stub part (3b) has a second spline toothing (5b), wherein, by means of the respective spline toothings (5a, 5b), the first and second shaft stub parts (3a, 3b) are rotationally operatively connected, in particular fixedly or in positively locking fashion, and/or are displaced at least partially one inside the other.

5. Transmission according to any of Claims 1 to 2 or 4, **characterized in that** the second shaft stub part (3b) is formed as a hub part which has a passage opening, wherein the hub part is pushed onto the circumference of the first shaft stub part (3a) or is arrangeable on the outer circumference of the first shaft stub part (3a), in particular, the second shaft stub part (3b) is screwed by means of a screw connection to the first shaft stub part (3a) .

6. Transmission according to Claim 5, **characterized in that** the first shaft stub part (3a) extends partially out of the transmission housing (2) through the second shaft stub part (3b), and the second shaft stub part (3b) is arranged substantially within the region of a wall (2a) of the transmission housing (2).

7. Transmission according to Claim 5 or 6, **characterized in that** the second toothed region (Z₆) is formed on the outer circumference of that region of the first shaft stub part (3a) which extends out of the transmission housing (2), in particular is operatively connected to a dual mass flywheel (ZMS) or to an internal combustion engine.

8. Transmission according to any of Claims 1 to 7, **characterized in that** a spur toothed gear (Z_{EM1}) which engages into the internal toothing (Z_{HI}) of the transmission input element (3) (or of the internal gear (Z_{H})) is provided or present.

9. Transmission according to Claim 8, **characterized in that** that region of the transmission input element (3) which forms the internal gear (Z_{H}) has a central web-like region (Z_{Hsteg}) which is designed such that, during installation of the first shaft stub part (3a) and/or during a cover-fitting process of the transmission housing (2), it is made possible for the first shaft stub part (3a) to be axially supported on the spur toothed gear (Z_{EM1}).

10. Transmission according to any of Claims 1 to 9, **characterized in that** the first toothed region (Z_{HZ}) has an internal toothing (Z_{HI}) and an external toothing (Z_{HA}), wherein the internal and external toothings (Z_{HI}, Z_{HA}) are separated by the web-like region (Z_{Hsteg}) and are formed substantially oppositely in relation one to another.

11. Transmission according to any of the preceding claims, **characterized in that** the central axis of the transmission input element (3) is arranged parallel and offset with respect to a first and/or with respect to a second electric machine shaft and/or a further transmission shaft, in particular with respect to the central axis of the spur gear.

12. Transmission according to any of the preceding claims, **characterized in that** a first electric machine shaft and/or a second electric machine shaft are arranged coaxially and concentrically with respect to one another, wherein, in particular, the first electric machine shaft is formed as an inner shaft and the second electric machine shaft is formed as a hollow shaft, and wherein the spur toothed gear is arranged rotationally fixedly on the first or the second electric machine shaft.

13. Transmission according to any of the preceding claims, **characterized in that** the transmission input element (3) is connected rotationally operatively to an internal combustion engine.

## Revendications

1. Transmission (1) pour un véhicule automobile, en particulier pour un véhicule hybride série/parallèle comportant au moins un carter de transmission (2) et comportant au moins un élément d'entrée de transmission (3) monté rotatif, tout le carter de transmission (2) étant composé d'au moins un composant de carter de transmission ou de plusieurs composants de carter de transmission et/ou d'au moins un couvercle de transmission, l'élément d'entrée de transmission (3) pouvant être entraîné par un moteur à combustion interne et/ou un moteur électrique et/ou à l'aide d'un volant d'inertie à deux masses (ZMS), l'élément d'entrée de transmission (3) étant réalisé au moins partiellement sous forme de couronne (Z_{H}), l'élément d'entrée de transmission (3) comprenant une première zone dentée (Z_{HZ}) et une zone de bout d'arbre (Z_{HW}), la première zone dentée (Z_{HZ}) comprenant une denture intérieure (Z_{HI}) et/ou une denture extérieure (Z_{HA}) et, à l'aide de la zone de bout d'arbre (Z_{HW}), l'élément d'entrée de transmission (3) pouvant être monté au moins partiellement sur une paroi du carter de transmission (2) et/ou du couvercle de carter, **caractérisée en ce que** la zone de bout d'arbre (Z_{HW}) est réalisée au moins partiellement en deux parties, **en ce que** la zone de bout d'arbre (Z_{HW}) de l'élément d'entrée de transmission (3) est, à l'état monté, formée au moins par un premier composant de bout d'arbre (3a) et par un deuxième composant de bout d'arbre (3b) qui sont reliés en rotation l'un à l'autre solidement et/ou par complémentarité de forme, **en ce que** le premier composant de bout d'arbre (3a) et la première zone dentée (Z_{HZ}) sont fabriqués et/ou réalisés sous forme de composant d'un seul tenant et le premier composant de bout d'arbre (3a) comprend la zone de l'élément de transmission (3) formant la couronne (Z_{H}).

2. Transmission selon la revendication 1, **caractérisée en ce que** le premier composant de bout d'arbre (3a) est disposé et/ou monté sensiblement à l'intérieur du carter de transmission (2) en particulier une fois un découvrement effectué et/ou en cas de découvrement réalisé.

3. Transmission selon l'une des revendications 1 et 2, **caractérisée en ce que** le deuxième composant de bout d'arbre (3b) est disposé et/ou monté sensiblement à l'extérieur du carter de transmission (2), en particulier le deuxième composant de bout d'arbre (3b) comprend une deuxième zone dentée (Z₆) pour la réalisation d'une liaison en rotation avec un volant d'inertie à deux masses (ZMS) ou avec un moteur à combustion interne, en particulier une fois un découvrement et/ou une réalisation du carter de transmission (2) effectués, le deuxième composant de bout d'arbre (3b) est relié en rotation avec le premier composant de bout d'arbre (3a) à l'aide d'un moyen de fixation (4).

4. Transmission selon l'une des revendications 1 à 3, **caractérisée en ce que** le premier composant de bout d'arbre (3a) comprend une première cannelure (5a) et le deuxième composant de bout d'arbre (3b) comprend une deuxième cannelure (5b), le premier et le deuxième composant de bout d'arbre (3a, 3b) étant reliés en rotation l'un à l'autre, en particulier fixement ou par complémentarité de forme et/ou étant emboîtés au moins partiellement l'un dans l'autre par le biais des cannelures respectives (5a, 5b).

5. Transmission selon l'une des revendications 1 à 2 ou 4, **caractérisée en ce que** le deuxième composant de bout d'arbre (3b) est réalisé sous forme de partie de moyeu comprenant une ouverture traversante, la partie de moyeu étant enfilée de manière périphérique sur le premier composant de bout d'arbre (3a) ou pouvant être disposée à la périphérie extérieure du premier composant de bout d'arbre (3a), en particulier étant vissée sur le premier composant de bout d'arbre (3a) à l'aide d'une liaison par vissage du deuxième composant de bout d'arbre (3b) .

6. Transmission selon la revendication 5, **caractérisée en ce que** le premier composant de bout d'arbre (3a) s'étend partiellement hors du carter de transmission (2) à travers le deuxième composant de bout d'arbre (3b) et le deuxième composant de bout arbre (3b) est disposé sensiblement à l'intérieur de la zone d'une paroi (2a) du carter de transmission (2).

7. Transmission selon la revendication 5 ou 6, **caractérisée en ce que** la deuxième zone dentée (Z₆) est réalisée à la périphérie extérieure de la zone du premier composant de bout d'arbre (3a) s'étendant hors du carter de transmission (2), en particulier est reliée fonctionnellement avec un deuxième volant d'inertie à deux masses (ZMS) ou avec un moteur à combustion interne.

8. Transmission selon l'une des revendications 1 à 7, **caractérisée en ce qu'**une roue dentée droite (Z_{EM1}) s'engrenant dans la denture intérieure (Z_{HI}) de l'élément d'entrée de transmission (3) (ou de la couronne (Z_{H})) est prévue ou présente.

9. Transmission selon la revendication 8, **caractérisée en ce que** la zone de l'élément d'entrée de transmission (3) formant la couronne (Z_{H}) comprend une zone (Z_{Hsteg}) médiane en forme de nervure qui est réalisée de telle sorte qu'en cas de montage du premier composant de bout d'arbre (3a) et/ou en cas de découvrement du carter de transmission (2), un appui axial du premier composant de bout d'arbre (3a) sur la roue dentée droite (Z_{EM1}) est rendu possible.

10. Transmission selon l'une des revendications 1 à 9, **caractérisée en ce que** la première zone dentée (Z_{HZ}) comprend une denture intérieure (Z_{HI}) et une denture extérieure (Z_{HA}), les dentures intérieure et extérieure (Z_{HI}, Z_{HA}) étant séparées par la zone (Z_{Hsteg}) en forme de nervure et étant réalisées sensiblement de manière opposée l'une à l'autre.

11. Transmission selon l'une des revendications précédentes, **caractérisée en ce que** l'axe médian de l'élément d'entrée de transmission (3) est disposé de manière décalée parallèlement par rapport à un premier et/ou par rapport à un deuxième arbre de moteur électrique et/ou un autre arbre de transmission, en particulier par rapport à l'axe médian de la roue droite.

12. Transmission selon l'une des revendications précédentes, **caractérisée en ce qu'**un premier arbre de moteur électrique et/ou un deuxième arbre de moteur électrique sont disposés coaxialement et/ou concentriquement l'un par rapport à l'autre, en particulier le premier arbre de moteur électrique étant réalisé sous forme d'arbre intérieur et le deuxième arbre de moteur électrique étant réalisé sous forme d'arbre creux, et la roue dentée droite étant disposée de manière solidaire en rotation sur le premier ou le deuxième arbre de moteur électrique.

13. Transmission selon l'une des revendications précédentes, **caractérisée en ce que** l'élément d'entrée de transmission (3) est relié en rotation avec un moteur à combustion interne.
